# FASCICULE DE BREVET EUROPEEN

(11) **EP 1 729 869 B1**
(45) Date de publication et mention de la délivrance du brevet: **20.02.2008**
(21) Numéro de dépôt: 05716952.6
(22) Date de dépôt: 08.03.2005
(51) Int. Cl.: B01D 33/19

(54) **RAIL DE SUPPORT DE CHASSIS TOURNANT DE DISPOSITIF DE FILTRATION ET PROCEDE POUR SA FABRICATION**
SCHIENE FUER EINEN FILTRATIONSDREHRAHMEN UND HERSTELLUNGSVERFAHREN DAFÜR
RAIL FOR A ROTATING FRAME OF A FILTRATION DEVICE, AND PRODUCTION METHOD THEREOF

(30) Priorité: 10.03.2004 BE 200400132
(43) Date de publication de la demande: 13.12.2006
(73) Titulaire: Prayon Technologies, 4480 Engis (BE)
(72) Inventeur: KUROWSKI, Serge, B-4121 Neuville-en-Condroz (BE)
(74) Mandataire: Claeys, Pierre
(86) Numéro de dépôt international: PCT/EP2005/051026
(87) Numéro de publication internationale: WO 2005/097291

(56) Documents cités:
- US-A- 2 684 158
- US-A- 3 139 404

## Description

La présente invention est relative à un rail de châssis tournant de dispositif de filtration à cellules de filtration disposées en carrousel, comprenant
- une première aile, découpée dans une tôle d'acier de façon à former un premier segment d'anneau circulaire ou polygonal et présentant une surface externe, destinée à coopérer avec au moins une cellule de filtration, et une surface interne,
- une deuxième aile, découpée dans une tôle d'acier de façon à former un deuxième segment d'anneau circulaire ou polygonal et présentant une surface externe et une surface interne,
- une âme en acier soudée transversalement aux surfaces internes des première et deuxième ailes de façon à former un rail ayant une section transversale d'une forme générale en H, et
- une plaque d'usure, découpée dans une tôle d'acier de façon à former un troisième segment d'anneau circulaire ou polygonal et fixée à ladite surface externe de la deuxième aile pour former une surface de contact avec des galets de support.

On connaît depuis longtemps déjà des dispositifs de filtration à cellules de filtration disposées en carrousel, qui sont en particulier en usage dans la production d'acide phosphorique, l'hydrométallurgie de cuivre, cobalt, zinc, uranium, etc., le lavage de charbon actif ou de phosphates, la filtration d'acides en général. De telles installations sont décrites par exemple dans le US-A-3.389.800 et le BE-A-847088, avec des cellules de filtration à basculement autour d'un axe radial, et dans la EP-A-1383588 avec des cellules de filtration à basculement autour d'un axe tangentiel.

Les cellules de ces installations sont soutenues par un châssis tournant comportant généralement deux anneaux formés chacun de plusieurs rails agencés l'un derrière l'autre de manière circulaire ou polygonale, ces anneaux reposant sur des galets de support (voir notamment US-A-3.389.800 et BE-A-847088).

Les rails formant ces anneaux ont généralement une section en forme de H comme indiqué au début et ils sont, d'une manière générale, non décrite dans ces brevets antérieurs, munis ou non sur la surface externe de l'aile inférieure d'une plaque d'usure soudée au rail.

Ces rails présentent l'inconvénient d'être assez peu résistants à la torsion et donc de nécessiter un grand nombre de galets pour supporter le châssis, ces galets représentent des pièces de l'installation qui s'usent relativement vite et doivent donc être fréquemment remplacées. Il en résulte un coût important pour la maintenance de l'installation. D'autre part, lorsque la plaque d'usure est elle-même usée, ce qui se produit également régulièrement, il faut soit enlever la plaque d'usure existante et en ressouder une nouvelle, soit remplacer tout le rail, ce qui représente, dans les deux cas, une opération coûteuse avec un arrêt prolongé de l'installation. Enfin, ces rails formés d'éléments soudés, c'est-à-dire qui ont subi des contraintes élevées pendant leur fabrication, ne sont pas usinés et les surfaces externes restent donc à l'état brut et sont défectueuses dans leur capacité de présenter une planéité et une horizontalité parfaites pour les cellules supportées et une surface de contact bien adaptée aux galets de support.

La présente invention a pour but de mettre au point un rail de châssis tournant de dispositif de filtration qui évite ces inconvénients et qui permette par sa structure une nette diminution des coûts de maintenance de l'installation.

On résout ces problèmes suivant l'invention par un rail tel qu'indiqué au début, dans lequel l'âme est formée d'au moins deux traverses en acier, cintrées ou pliées de manière parallèle et soudées auxdites surfaces internes des ailes et la deuxième aile et la plaque d'usure présentent des perçages correspondants aux travers desquels sont disposés des éléments de fixation qui fixent la plaque d'usure à la deuxième aile d'une manière détachable. Par son âme au moins double, le rail de support offre une résistance à la torsion nettement améliorée et donc permet une réduction du nombre de galets de support du châssis tournant D'autre part, grâce à un procédé de fabrication particulier, indiqué dans la suite, la deuxième aile, c'est-à-dire généralement l'aile inférieure, du rail peut être munie de perçages, ce qui permet une fixation détachable de la plaque d'usure sur les rails et donc un remplacement rapide et économique de celle-ci.

Suivant une forme de réalisation avantageuse de l'invention, la première aile et/ou la deuxième aile présentent une surface externe planée par usinage. A nouveau grâce au procédé de fabrication mentionné ci-dessus, les ailes soudées à la au moins double âme et en particulier leur surface externe peuvent être usinées, malgré les tensions induites par le cintrage ou pliage, le découpage et le soudage. Cet usinage peut consister en un planage qui va permettre d'obtenir l'horizontalité requise pour les cellules sur tout le pourtour du châssis et une distribution optimale des charges sur les galets qui subiront ainsi de plus faibles sollicitations et moins d'usure.

D'autres formes de réalisation de rails suivant l'invention sont indiquées dans les revendications annexées.

L'invention concerne également un châssis tournant de dispositif de filtration à cellules de filtration disposées en carrousel comportant plusieurs rails suivant l'invention agencés en succession de manière circulaire ou polygonale.

L'invention est aussi relative à un procédé de fabrication de rail de support de châssis tournant de dispositif de filtration à cellules de filtration disposées en carrousel suivant l'invention, ce procédé comprenant
- un découpage dans une tôle d'acier d'une première aile et d'une deuxième aile du rail ainsi que d'une plaque d'usure de façon à leur donner une forme de segment d'anneau,
- un cintrage ou pliage d'au moins deux traverses en acier de manière parallèle,
- un soudage desdites au moins deux traverses parallèles à la surface interne des première et deuxième ailes,
- une élimination de contraintes résiduelles présentes dans l'acier,
- une réalisation de perçages correspondants à travers la deuxième aile et la plaque d'usure, et
- une fixation de la plaque d'usure sur la surface externe de la deuxième aile par des éléments de fixation détachables passés au travers des perçages susdits.

Avantageusement le procédé suivant l'invention comprend en outre un planage des surfaces externes desdites première et deuxième ailes, qui sera réalisé avant la phase de perçage susdite.

Les traverses et les ailes du rail sont en acier. Avantageusement, ces éléments sont en acier inoxydable et, dans ce cas, on procède à l'élimination des contraintes par martelage des zones soudées. Si ces éléments sont en acier au carbone, on procèdera de préférence à un recuit du rail à une température supérieure à 600°C, de préférence de l'ordre de 620°C. La durée de recuit est alors avantageusement de l'ordre de 2 heures.

Des modes de réalisation particuliers du procédé de fabrication suivant l'invention sont indiqués dans les revendications annexées. D'autres détails et particularités de l'invention ressortiront de la description donnée ci-après à titre non limitatif et avec référence aux dessins annexés.

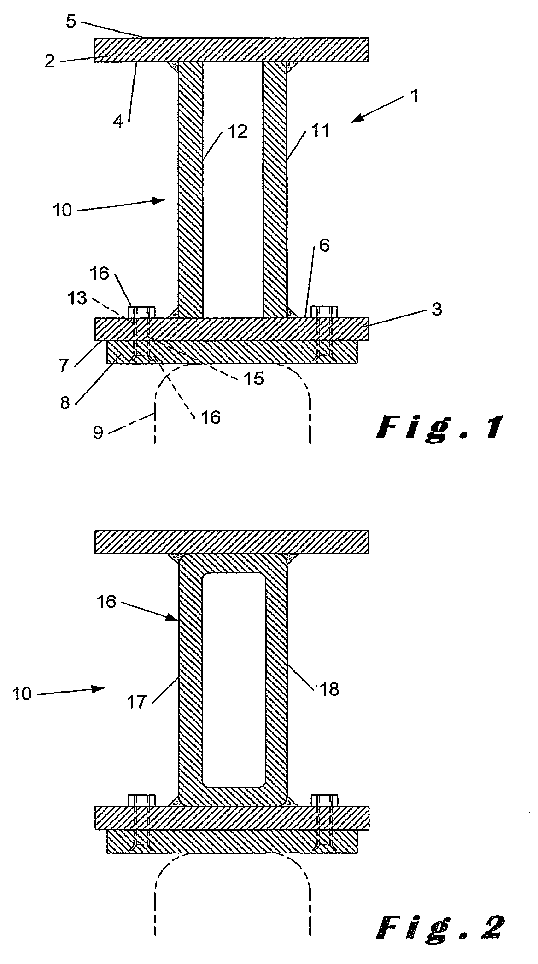

Sur la figure 1, on a représenté en section transversale un rail 1 de châssis tournant de dispositif de filtration à cellules de filtration disposées en carrousel. Ce rail comprend une première aile 2 et une deuxième aile 3. Ces ailes sont découpées dans une tôle d'acier de façon à former chacune un segment d'anneau circulaire ou polygonal, les rails pouvant ainsi être réunis l'un à l'autre en formant un cercle ou polygone complet autour du pivot du carrousel.

L'aile 2 présente une surface interne 4 et une surface externe 5, cette dernière étant destinée à supporter au moins une cellule de filtration connue, non représentée, et cela en supportant celle-ci directement ou par l'intermédiaire d'une structure de soutien.

L'aile 3 présente elle aussi une surface interne 6 et une surface externe 7. Sur cette dernière est fixée une plaque d'usure 8, également découpée dans une tôle d'acier de façon à former un segment d'anneau circulaire ou polygonal. Cette plaque d'usure 8 est fixée sur l'aile 3 pour former une surface de contact avec des galets de support 9 qui, d'une manière connue, tournent fou sur une structure de base stationnaire, non représentée.

Conformément à l'invention, l'aile 3 et la plaque d'usure 8 présentent, comme éléments de fixation, des perçages correspondants 13 et 14. Au travers de ceux-ci on peut passer des boulons 15 à visser dans les écrous 16 pour serrer, à bloc la plaque d'usure 8 contre la surface externe 7 de l'aile 3 du rail.

Le rail 1 comprend en outre une âme en acier 10 soudée transversalement aux surfaces internes 4 et 6 des première et deuxième ailes 2 et 3. La forme générale de la section transversale du rail suivant l'invention correspond approximativement à un H couché.

Suivant l'invention, l'âme est formée, dans l'exemple de réalisation illustré, de deux traverses en acier 11, 12, qui peuvent être des bandes d'acier laminées. Elles sont cintrées ou pliées conformément au rayon du carrousel de façon à rester mutuellement équidistantes, c'est-à-dire à s'étendre parallèlement l'une à l'autre.

Le châssis tournant formé par les rails 1 successifs est entraîné en rotation d'une manière connue en soi, par exemple par un système de moteur-crémaillère, et il roule sur les galets 9, ce qui entraîne au fur et à mesure du temps une usure des galets 9 et une usure de la plaque d'usure 8.

Ces rails offrent toutefois le grand avantage, par rapport aux rails actuellement exploités, de présenter grâce à leur âme au moins double une beaucoup plus grande résistance à la torsion et à la flexion, ce qui permet une utilisation d'un moins grand nombre de galets, et donc un remplacement moins important de galets.

D'autre part, une fois la plaque d'usure usée, il suffit de dévisser celle-ci du rail et de la remplacer par une nouvelle, ce qui est une opération simple, peu coûteuse et demandant peu de temps, sans démontage du châssis tournant lui-même.

Tous ces avantages influent sur la durée de vie du rail lui-même qu'on peut évaluer à 20-25 ans, au lieu de 5-10 ans pour les rails selon l'état de la technique.

Il en résulte donc une énorme économie dans le fonctionnement et la maintenance du dispositif de filtration en général.

Suivant une variante de réalisation de rail suivant l'invention, l'âme est formée d'un tube en acier 16 présentant une section rectangulaire, dont les longs côtés 17 et 18 représentent les deux traverses d'une âme suivant l'invention.

Pour fabriquer les rails suivant l'invention on prévoit, comme déjà signalé, un découpage dans une tôle d'acier des deux ailes 2 et 3 et de la plaque d'usure 8 de façon à leur donner l'allure de segments d'anneau correspondants, un cintrage ou pliage des deux traverses 11 et 12 de façon qu'elles soient équidistantes, c'est-à-dire parallèles et, à la surface interne des ailes 2 et 3, un soudage des traverses 11 et 12.

Les rails ainsi obtenus ont subi des contraintes importantes pendant le cintrage ou pliage et le soudage, et un planage des surfaces externes 5 et 7 des ailes doit souvent être pratiqué par déformation à froid et à l'aide d'une presse, ce qui induit encore des contraintes supplémentaires dans le rail. En revanche, après élimination des contraintes résiduelles, par exemple par martelage des soudures ou par recuit de détente, le perçage et le planage par usinage deviennent possibles ce qui permet l'obtention de surfaces externes bien finies qui garantissent l'horizontalité des cellules, un ajustement du contact avec les galets 9 et une répartition optimisée des charges sur ceux-ci.

On a prévu suivant l'invention, dans le cas où les éléments du rail sont fabriqués en acier inoxydable d'éliminer les contraintes résiduelles par un martelage des zones soudées. Dans le cas d'acier au carbone, on prévoit plutôt de les éliminer par un recuit de préférence à une température supérieure à 600°C, avantageusement de l'ordre de 620°C. On peut prévoir notamment un recuit d'une durée de 2 heures.

Il doit être entendu que la présente invention n'est en aucune façon limitée aux formes et modes de réalisation décrits ci-dessus et que bien des modifications peuvent y être apportées sans sortir du cadre des revendications annexées.

## Revendications

1. Rail (1) de support de châssis tournant de dispositif de filtration à cellules de filtration disposées en carrousel, comprenant
- une première aile (2), découpée dans une tôle d'acier de façon à former un premier segment d'anneau circulaire ou polygonal et présentant une surface externe (5), destinée à coopérer avec au moins une cellule de filtration, et une surface interne (4),
- une deuxième aile (3), découpée dans une tôle d'acier de façon à former un deuxième segment d'anneau circulaire ou polygonal et présentant une surface externe (7) et une surface interne (8),
- une âme (10) en acier soudée transversalement aux surfaces internes (4, 6) des première et deuxième ailes (2, 3) de façon à former un rail ayant une section transversale d'une forme générale en H, et
- une plaque d'usure (8), découpée dans une tôle d'acier de façon à former un troisième segment d'anneau circulaire ou polygonal et fixée à ladite surface externe (7) de la deuxième aile (3) pour former une surface de contact avec des galets de support (9),
**caractérisé en ce que** l'âme (10) est formée d'au moins deux traverses (11, 12) en acier, cintrées ou pliées de manière parallèle et soudées auxdites surfaces internes (4, 6) des ailes (2, 3) et **en ce que** la deuxième aile (3) et la plaque d'usure (8) présentent des perçages (13, 14) correspondants aux travers desquels sont disposés des éléments de fixation (15) qui fixent la plaque d'usure (8) à la deuxième aile (3) d'une manière détachable.

2. Rail de support suivant la revendication 1, **caractérisé en ce que** la première aile (2) et/ou la deuxième aile (3) présentent une surface externe (5, 7) planée par usinage.

3. Rail de support suivant l'une ou l'autre des revendications 1 et 2, **caractérisé en ce que** l'âme (10) est formée d'un tube (16) présentant une section transversale rectangulaire et des longs côtés (17, 18) formant lesdites traverses parallèles.

4. Rail de support suivant l'une quelconque des revendications 1 à 3, **caractérisé en ce que** lesdits éléments de fixation sont des boulons (15) coopérant avec des écrous (16).

5. Châssis tournant de dispositif de filtration à cellules de filtration disposées en carrousel comportant plusieurs rails (1) suivant l'une quelconque des revendications 1 à 4, agencés en succession de manière circulaire ou polygonale.

6. Procédé de fabrication de rail de support de châssis tournant de dispositif de filtration à cellules de filtration disposées en carrousel suivant l'une quelconque des revendications 1 à 4, comprenant
- un découpage dans une tôle d'acier d'une première aile et d'une deuxième aile du rail ainsi que d'une plaque d'usure de façon à leur donner une forme de segment d'anneau ou de polygone,
- un cintrage ou pliage d'au moins deux traverses en acier de manière parallèle,
- un soudage desdites au moins deux traverses parallèles à la surface interne des première et deuxième ailes,
- une élimination de contraintes résiduelles présentes dans l'acier,
- une réalisation de perçages correspondants à travers la deuxième aile et la plaque d'usure, et
- une fixation de la plaque d'usure sur la surface externe de la deuxième aile par des éléments de fixation détachables passés au travers des perçages susdits.

7. Procédé suivant la revendication 6, **caractérisé en ce qu'**il comprend en outre un planage par usinage des surfaces externes desdites première et deuxième ailes.

8. Procédé suivant l'une ou l'autre des revendications 6 et 7 **caractérisé en ce** le rail est en acier inoxydable et en ce que l'élimination des contraintes résiduelles consiste en un martelage de zones soudées.

9. Procédé suivant l'une ou l'autre des revendications 6 et 7, **caractérisé en ce que** le rail est en acier au carbone et **en ce que** l'élimination des contraintes résiduelles consiste en un recuit de celui-ci.

10. Procédé suivant la revendication 9, **caractérisé en ce que** ledit recuit a lieu à une température supérieure à 600°C, de préférence de l'ordre de 620°C.

## Claims

1. Rotating-frame support rail (1) for a filtration device with filtration cells disposed in a carousel, comprising
- a first flange (2), cut from a sheet of steel so as to form a first circular or polygonal ring segment and having an external surface (5), intended to cooperate with at least one filtration cell, and an internal surface (4),
- a second flange (3), cut from a sheet of steel so as to form a second circular or polygonal ring segment and having an external surface (7) and an internal surface (8),
- a steel web (10) welded transversely to the internal surfaces (4, 6) of the first and second flanges (2, 3) so as to form a rail having a transverse section roughly in an H shape, and
- a wear plate (8), cut from a sheet of steel so as to form a third circular or polygonal ring segment and fixed to the said external surface (7) of the second flange (3) in order to form a contact surface for support rollers (9),
**characterised in that** the web (10) is formed from at least two steel cross-ties (11, 12), curved or bent in a parallel fashion and welded to the said internal surfaces (4, 6) of the flanges (2, 3), and **in that** the second flange (3) and the wear plate (8) have corresponding piercings (13, 14), through which there are disposed fixing elements (15) that fix the wear plate (8) to the second flange (3) in a detachable manner.

2. Support rail according to claim 1, **characterised in that** the first flange (2) and/or the second flange (3) have an external surface (5, 7) planed by machining.

3. Support rail according to one or other of claims 1 and 2, **characterised in that** the web (10) is formed by a tube (16) having a rectangular cross section and long sides (17, 18) forming the said parallel cross-ties.

4. Support rail according to any one of claims 1 to 3, **characterised in that** the said fixing elements are bolts (15) cooperating with nuts (16).

5. Rotating frame for a filtration device with filtration cells disposed in a carousel comprising several rails (1) according to any one of claims 1 to 4, arranged in succession in a circular or polygonal manner.

6. Method of manufacturing a rotating-frame support rail for a filtration device with filtration cells disposed in a carousel according to any one of claims 1 to 4, comprising
- cropping from a steel sheet a first flange and second flange of the rail and a wear plate so as to give them the form of a ring or polygon segment,
- curving or bending at least two steel cross-ties in a parallel manner,
- welding the said at least two cross-ties parallel to the internal surface of the first and second flanges,
- eliminating any residual stresses present in the steel,
- producing corresponding piercings through the second flange and the wear plate, and
- fixing the wear plate to the external surface of the second flange by detachable fixing elements passed through the aforementioned piercings.

7. Method according to claim 6, **characterised in that** it also comprises a planing by machining of the external surfaces of the said first and second flanges.

8. Method according to one or other of claims 6 and 7, **characterised in that** the rail is made from stainless steel and **in that** the elimination of the residual stresses consists of a peening of welded areas.

9. Method according to one or other of claims 6 and 7, **characterised in that** the rail is made from carbon steel and **in that** the elimination of the residual stresses consists of a annealing thereof.

10. Method according to claim 9, **characterised in that** the said annealing takes place at a temperature above 600°C, preferably around 620°C.

## Patentansprüche

1. Stützschiene für einen Filtrationsdrehrahmen mit Filterzellen, die im Karussell angeordnet sind, umfassend:
- einen ersten Flügel (2), der aus einem Stahlblech ausgeschnitten ist, um ein erstes kreisförmiges oder polygonales Ringsegment zu bilden, und der eine Außenfläche (5), die dazu bestimmt ist, mit mindestens einer Filterzelle zusammenzuwirken, und eine Innenfläche (4) aufweist,
- einen zweiten Flügel (3), der aus einem Stahlblech ausgeschnitten ist, um ein zweites kreisförmiges oder polygonales Ringsegment zu bilden, und der eine Außenfläche (7) und eine Innenfläche (8) aufweist,
- einen Kern (10) aus Stahl, der quer zu den Innenflächen (4, 6) der ersten und zweiten Flügel (2, 3) aufgeschweißt ist, um eine Schiene mit einem Querschnitt von einer allgemeinen H-Form zu bilden, und
- eine Verschleißplatte (8), die aus einem Stahlblech ausgeschnitten ist, um ein drittes kreisförmiges oder polygonales Ringsegment zu bilden, und die auf der Außenfläche (7) des zweiten Flügels (3) befestigt ist, um eine Kontaktfläche mit Stützrollen (9) zu bilden,
**dadurch gekennzeichnet, dass** der Kern (10) von mindestens zwei Querstreben (11, 12) aus Stahl gebildet ist, die parallel gebogen oder gefaltet und auf die Innenflächen (4, 6) der Flügel (2, 3) geschweißt sind, und dass der zweite Flügel (3) und die Verschleißplatte (8) entsprechende Bohrungen (13, 14) aufweisen, durch die Befestigungselemente (15) angeordnet sind, die die Verschleißplatte (8) am zweiten Flügel (3) auf abnehmbare Weise befestigen.

2. Stützschiene nach Anspruch 1, **dadurch gekennzeichnet, dass** der erste Flügel (2) und/oder der zweite Flügel (3) eine Außenfläche (5, 7) aufweisen, die plan bearbeitet wurde.

3. Stützschiene nach einem der Ansprüche 1 und 2, **dadurch gekennzeichnet, dass** der Kern (10) von einem Rohr (16) gebildet ist, das einen rechteckigen Querschnitt und lange Seiten (17, 18) aufweist, die die parallelen Querstreben bilden.

4. Stützschiene nach einem der Ansprüche 1 bis 3, **dadurch gekennzeichnet, dass** die Befestigungselemente Bolzen (15) sind, die mit Muttern (16) zusammenwirken.

5. Filtrationsdrehrahmen mit Filterzellen, die im Karussell angeordnet sind, umfassend mehrere Schienen (1) nach einem der Ansprüche 1 bis 4, die kreisförmig oder polygonal aufeinander folgend angeordnet sind.

6. Verfahren zur Herstellung einer Stützschiene eines Filtrationsdrehrahmens mit Filterzellen, die im Karussell angeordnet sind, nach einem der Ansprüche 1 bis 4, umfassend:
- ein Ausschneiden eines ersten Flügels und eines zweiten Flügels der Schiene sowie einer Verschleißplatte aus einem Stahlblech, um ihnen eine Form eines ringförmigen oder polygonalen Segments zu verleihen,
- ein Biegen oder Falten mindestens zweier Querstreben aus Stahl auf parallele Weise,
- ein Schweißen der mindestens zwei parallelen Querstreben auf die Innenfläche des ersten und zweiten Flügels,
- ein Beseitigung der im Stahl vorhandenen Restspannungen,
- eine Herstellung von entsprechenden Bohrungen durch den zweiten Flügel und die Verschleißplatte, und
- eine Befestigung der Verschleißplatte auf der Außenfläche des zweiten Flügels durch abnehmbare Befestigungselemente, die durch die oben erwähnten Bohrungen geführt sind.

7. Verfahren nach Anspruch 6, **dadurch gekennzeichnet, dass** es ferner eine Planbearbeitung der Außenflächen des ersten und zweiten Flügels umfasst.

8. Verfahren nach einem der Ansprüche 6 und 7, **dadurch gekennzeichnet, dass** die Schiene aus rostfreiem Stahl ist, und dass die Beseitigung der Restspannungen in einem Kalthärten durch Hämmern der Schweißzonen besteht.

9. Verfahren nach einem der Ansprüche 6 und 7, **dadurch gekennzeichnet, dass** die Schiene aus Kohlenstoffstahl ist, und dass die Beseitigung der Restspannungen in einem Glühen desselben besteht.

10. Verfahren nach Anspruch 9, **dadurch gekennzeichnet, dass** das Glühen bei einer Temperatur über 600 °C, vorzugsweise von ungefähr 620 °C, stattfindet.
